# EUROPEAN PATENT APPLICATION

(11) **EP 4 604 293 A1**
(43) Date of publication of application: **20.08.2025**
(21) Application number: 23929809.4
(22) Date of filing: 04.09.2023
(51) Int. Cl.: H01M 50/249, H01M 50/251, H01M 50/258

(54) **ENERGY STORAGE APPARATUS**

(30) Priority: 31.03.2023 CN 202320694413 U
(71) Applicant: Contemporary Amperex Technology (Hong Kong) Limited, Central (HK)
(72) Inventor: CHEN, Xing, Ningde, Fujian 352100 (CN); ZHANG, Hua, Ningde, Fujian 352100 (CN); CHEN, Liangying, Ningde, Fujian 352100 (CN); LI, Jiahong, Ningde, Fujian 352100 (CN)
(74) Representative: Frick, Robert
(86) International application number: PCT/CN2023/116801
(87) International publication number: WO 2024/198235

(57) **Abstract**

An energy storage apparatus, comprising an apparatus body (110) and a support structure (120), which is arranged at the bottom of the apparatus body and used for supporting the apparatus body, wherein the support structure comprises a first support plate (121), which comprises a first mounting wall (1211); an orthographic projection (Y) of the first mounting wall in a first plane (X) is located outside an orthographic projection (Z) of the apparatus body in the first plane; the first mounting wall is provided with a first assembly hole (1211a), through which the apparatus body is fixed to the ground; and the first plane is perpendicular to the direction of gravity (G) of the energy storage apparatus. By means of the present invention, the assembly efficiency of fixing the energy storage apparatus to the ground can be improved.

## Description

The present application claims priority to utility model application No. 202320694413.9, filed with China National Intellectual Property Administration on March 31, 2023 and entitled "ENERGY STORAGE APPARATUS", the content of which is incorporated herein by reference in its entirety.

### TECHNICAL FIELD

The present application relates to the technical field of energy storage, and in particular, to an energy storage device.

### BACKGROUND

At present, before fixing an energy storage device to the ground, it is necessary to drill holes in the ground in advance, and bolts are then allowed to pass through assembly holes in the bottom support structure and inserted into the holes in the ground, thus fixing the energy storage device to the ground. In this solution, there is the problem of difficulty in assembling in the case that the assembly holes in the support structure cannot be aligned precisely with the holes in the ground.

### SUMMARY

In view of this, the embodiment of the present application provides an energy storage device, which can improve the assembly efficiency of fixing the energy storage device to the ground.

In a first aspect, an energy storage device is provided. The energy storage device includes a device body and a support structure provided at the bottom of the device body for supporting the device body, where the support structure includes a first support plate, the first support plate includes a first mounting wall, an orthographic projection of the first mounting wall on a first plane is located outside an orthographic projection of the device body on the first plane, the first mounting wall is provided with a first assembly hole for fixing the device body to the ground, and the first plane is perpendicular to a direction of gravity of the device body.

In this embodiment, in one aspect, the orthographic projection of the first mounting wall of the support structure that is provided with the first assembly hole on the first plane is located outside the orthographic projection of the device body on the first plane, such that the first assembly hole is present in a staggered manner relative to the device body in the horizontal direction and thereby an operable space can be provided for the hole drilling apparatus in the horizontal direction, and this solution enables more convenient hole drilling and mounting compared with the solution where the orthographic projection of the first mounting wall on the first plane is located inside the orthographic projection of the device body on the first plane; in another aspect, this arrangement also allows for hole drilling in the ground at a position corresponding to the first assembly hole after the energy storage device is moved to the predetermined mounting area, such that the problem of misalignment between the assembly hole of the support structure and the hole in the ground due to hole drilling in advance in the predetermined mounting area can be ameliorated or solved, thereby improving the assembly efficiency of the energy storage device.

In a possible implementation, the first support plate further includes a second mounting wall connected to the first mounting wall, where an orthographic projection of the second mounting wall on the first plane is located inside the orthographic projection of the device body on the first plane, and the second mounting wall is provided with a second assembly hole for fixing the device body to the ground.

In this embodiment, in addition to the first mounting wall with the orthographic projection on the first plane located outside the orthographic projection of the device body on the first plane, the first support plate further includes the second mounting wall with the orthographic projection on the first plane located inside the orthographic projection of the device body on the first plane, and the second mounting wall is provided with the second assembly hole. In one aspect, when the mounting space in the horizontal direction is insufficient, this enables the operator to fix the energy storage device to the ground by using the second assembly hole; in another aspect, when the mounting space in the horizontal direction is sufficient, this facilitates the mounting of the energy storage device through both the first assembly hole and the second assembly hole, which not only can save the mounting space, but also can improve the stability of the energy storage device.

In a possible implementation, the first support plate is a flat plate.

In this embodiment, allowing the first support plate to be provided as the flat plate can save the space occupied by the first support plate and facilitate the processing of the first support plate. Meanwhile, the flat plate structure of the first support plate allows the first mounting wall and the second mounting wall to be two parts of the first support plate on the same plane, which can facilitate the formation of the assembly hole, save the cost, and ensure the processing and assembly efficiency.

In a possible implementation, the first mounting wall and the second mounting wall are integrally formed.

In this embodiment, allowing the first mounting wall and the second mounting wall to be integrally formed can enhance the connection strength between the first mounting wall and the second mounting wall, thereby improving the stability and reliability of the energy storage device.

In a possible implementation, the support structure further includes a fixing member, where the fixing member protrudes relative to the first support plate in a direction away from the first support plate, and the fixing member is connected between the device body and the first support plate.

In this embodiment, in one aspect, the fixing member can connect the device body to the first support plate, such that the support structure can support the device body; in another aspect, the height of the device body may be raised by the fixing member to reserve more mounting space for the first support plate, thereby ensuring the reliable, stable, and convenient mounting of the energy storage device.

In a possible implementation, the orthographic projection of the first mounting wall and the orthographic projection of the second mounting wall on the first plane are located on two sides, respectively, of an orthographic projection of the fixing member on the first plane.

In this embodiment, allowing the orthographic projection of the first mounting wall and the orthographic projection of the second mounting wall on the first plane to be provided on two sides, respectively, of the orthographic projection of the fixing member on the first plane is beneficial for reducing the material consumption of the support structure, thereby lowering the cost of the energy storage device.

In a possible implementation, a dimension of the first mounting wall is smaller than a dimension of the second mounting wall in the horizontal direction.

In this embodiment, allowing the dimension of the first mounting wall to be smaller than the dimension of the second mounting wall in the horizontal direction can minimize the gap between energy storage devices, thereby enhancing the integration level of a plurality of energy storage devices.

In a possible implementation, a gasket is provided on a bottom surface of the first support plate.

In this embodiment, adding the gasket to the bottom surface of the first support plate is beneficial for reducing the probability of wearing and/or corrosion of the coating on the bottom of the support structure.

In a possible implementation, the gasket is fixedly connected to the first support plate through rivet nuts.

In this embodiment, the use of the rivet nuts to fix the first support plate and the gasket together can provide a reliable connection at low cost and the rivet nuts are easy to use; meanwhile, since a small space is occupied for the rivet pulling process, connecting the gasket and the first support plate in a rivet pulling mode can simplify the mounting and operation processes and thereby improve the operation efficiency.

In a possible implementation, a protection plate is provided at the bottom of the device body.

In this embodiment, adding the protection plate to the bottom of the device body can avoid the damage, caused by forklift arms, to the coating of the contact surface at the bottom of the device body when the energy storage device is transported by a forklift.

In a possible implementation, the protection plate is provided in an edge region at the bottom of the device body.

In this embodiment, the protection plate is provided in the edge region at the bottom of the device body, and the protection plate does not need to completely cover the bottom of the device body, that is, the protection plate only needs to cover the part of the bottom of the device body that may be in contact with the forklift, such that the material consumption of the protection plate can be reduced while reducing the damage, caused by the forklift arms, to the coating of the contact surface at the bottom of the device body, thereby lowering the cost.

In a possible implementation, the support structure further includes a second support plate, where an orthographic projection of the second support plate on the first plane is located inside the orthographic projection of the device body on the first plane, and the second support plate is provided with a third assembly hole for fixing the device body to the ground.

In this embodiment, in addition to the first assembly hole with the orthographic projection on the first plane perpendicular to the direction of gravity located outside the orthographic projection of the device body on the first plane, the support structure further includes the third assembly hole with the orthographic projection on the first plane located inside the orthographic projection of the device body on the first plane, such that the hole drilling apparatus can perform on-site drilling outside the device body, which improves the assembly efficiency and strengthens the fixation between the device body and the ground as well.

In a possible implementation, the support structure includes at least one pair of first support plates, each pair of first support plates includes two first support plates, at least one second support plate is correspondingly provided for each pair of first support plates, the two first support plates of each pair of first support plates are spaced apart from each other at the bottom of the device body, and the second support plate is provided between the two first support plates.

In this embodiment, allowing the two first support plates of each pair of first support plates to be spaced apart from each other at the bottom of the device body and providing the second support plate between the two first support plates is beneficial for making the support structure uniformly provide a support force for the device body, thereby improving the stability of the energy storage device.

In a second aspect, a mounting method of the energy storage device according to the first aspect and any one of the possible implementations of the first aspect is provided. The mounting method includes: placing the energy storage device in a predetermined mounting area; drilling a hole in the predetermined mounting area in the ground corresponding to a first assembly hole; and inserting a bolt into the first assembly hole and the hole formed in the ground, thus fixing the energy storage device to the ground.

### BRIEF DESCRIPTION OF THE DRAWINGS

FIG. 1 shows a front view of an energy storage device according to an embodiment of the present application.
FIG. 2 shows a bottom view of an energy storage device according to an embodiment of the present application.
FIG. 3 shows a schematic structural diagram of a support structure according to an embodiment of the present application.
FIG. 4 shows a schematic block diagram of a mounting method of an energy storage device according to an embodiment of the present application.

Description of reference numerals: 100-energy storage device; 110-device body; 120-support structure; 121-first support plate; 1211-first mounting wall; 1211a-first assembly hole; 130-protection plate; 123-second support plate; 123a-third assembly hole; 1212-second mounting wall; 1212a-second assembly hole; 122-fixing member; 124-gasket; 125-rivet nut; G-direction of gravity; X-first direction; 126-mounting hole.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

In the description of the present application, it should be noted that, unless otherwise specified, "a plurality" means two or more; the orientations or positional relationships indicated by the terms "upper", "lower", "left", "right", "inner", "outer", and the like are merely for the convenience of describing the present application and simplifying the description, rather than indicating or implying that the apparatus or element referred to must have a specific orientation or be configured and operated in the specific orientation, and thus shall not be construed as limitations to the present application. Furthermore, the terms "first", "second", "third", and the like are used for descriptive purposes only and shall not be construed as indicating or implying relative importance. The "perpendicular" is not strictly perpendicular but is within the allowable range of error. The "parallel" is not strictly parallel but is within the allowable range of error.

The following description is given with the directional terms as illustrated in the drawings and is not intended to limit the specific structure of the present application. In the description of the present application, it should further be noted that unless otherwise explicitly specified or defined, the terms "mount", "connect", and "link" shall be construed broadly and may be, for example, fixed connection, detachable connection, or integral connection, or direct connection or indirect connection via an intermediate. For those of ordinary skill in the art, the specific meaning of the above terms in the present application may be interpreted according to the specific condition.

In the present application, the term "and/or" is merely a way to describe the association relationship between associated objects and indicates that there may be three relationships. For example, A and/or B may indicate that: A is present, both A and B are present, and B is present. In addition, the character "/" herein generally indicates an "or" relationship between the associated objects before and after the "/".

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the described embodiments of the present application can be combined with other embodiments.

Typically, a battery compartment may be included in the energy storage device, and assemblies, such as a plurality of batteries, a main control component, a busbar component, and a thermal management component, may be arranged in the battery compartment.

A battery may also referred to as an electrical box, which includes a box body and one or more battery cells encapsulated by the box body. Optionally, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cells may be cylindrical, flat, rectangular parallelepiped-shaped, or in other shapes. This is also not limited in the embodiments of the present application.

Optionally, the plurality of batteries arranged in the battery compartment may be connected in series, in parallel, or in series-parallel. In some embodiments, the plurality of batteries may be connected to the main control component through the busbar component, and the electrical connection between the plurality of batteries is achieved through the main control component.

In addition to the plurality of batteries, the main control component, and the busbar component, the energy storage device further includes a thermal management component. The thermal management component includes, but is not limited to, an air conditioning assembly, a fan assembly, a water cooling duct, and the like, which may be used for thermal management inside the energy storage device to adjust the internal temperature of the energy storage device.

Typically, the energy storage device is fixed to the ground by a support structure. Specifically, the support structure is provided with assembly holes. Before the energy storage device is mounted, a hole drilling apparatus may be used to drill holes in a predetermined mounting area. Then, the energy storage device is moved to the predetermined mounting area to align the assembly holes in the support structure with the holes in the ground. Finally, bolts are allowed to pass through the assembly holes in the support structure of the energy storage device and inserted into the holes in the ground, thus fixing the energy storage device to the ground. Existing energy storage devices face the problem of difficulty in assembling or inappropriate assembling in the case that the assembly holes in the support structure cannot be aligned precisely with the holes in the ground.

Through intensive studies, it has been found that the reason why the assembly holes cannot align precisely with the holes in the related art is that the holes of the support structure are located directly below the energy storage device, making it difficult to align the assembly holes with the holes during the mounting operation. Therefore, the present application provides an energy storage device. The energy storage device includes a device body and a support structure provided at the bottom of the device body. The support structure includes a first support plate, and the first support plate includes a first mounting wall provided with a first assembly hole. The orthographic projection of the first mounting wall on a first plane perpendicular to the direction of gravity of the energy storage device is located outside the orthographic projection of the device body on the first plane. In one aspect, this enables the first assembly hole to be present in a staggered manner relative to the device body in the horizontal direction and thereby an operable space is provided for the hole drilling apparatus in the horizontal direction, and this solution enables more convenient hole drilling and mounting compared with the solution where the orthographic projection of the first mounting wall on the first plane is located inside the orthographic projection of the device body on the first plane; in another aspect, this arrangement also allows for hole drilling in the ground where the first assembly hole is located after the energy storage device is moved to the predetermined mounting area, such that the problem of misalignment between the assembly hole of the support structure and the hole in the ground due to hole drilling in advance in the predetermined mounting area can be ameliorated or solved, thereby improving the assembly efficiency of the energy storage device.

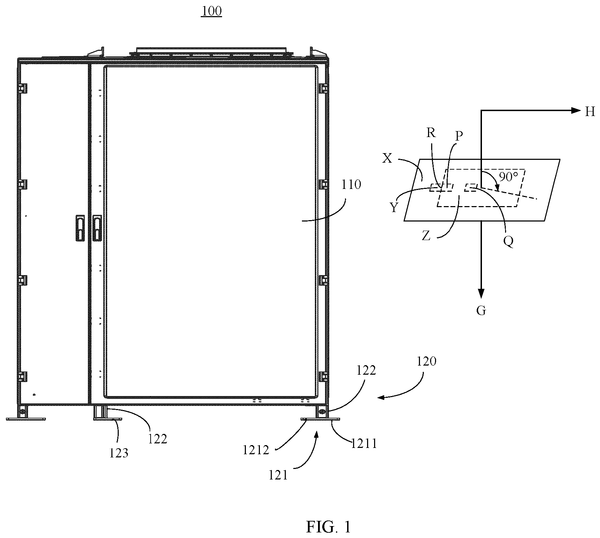

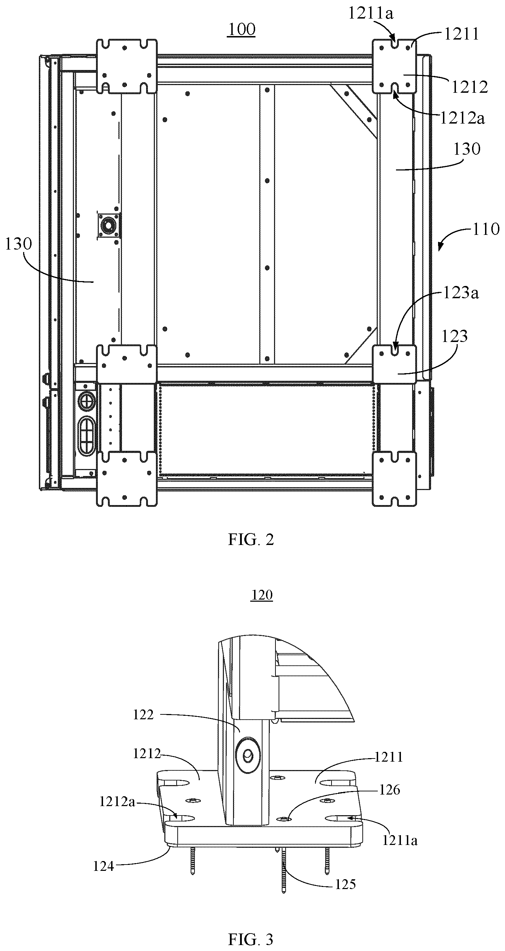

FIG. 1 shows a front view of an energy storage device 100 according to an embodiment of the present application. FIG. 2 shows a bottom view of the energy storage device 100 according to an embodiment of the present application. As shown in FIG. 1 and FIG. 2, the energy storage device 100 includes a device body 110 and a support structure 120, where the device body 110 is a main structure of the energy storage device 100, and the support structure 120 is provided at the bottom of the device body 110 for supporting and mounting the device body 110.

The support structure 120 includes a first support plate 121, and the first support plate 121 includes a first mounting wall 1211. The orthographic projection Y of the first mounting wall 1211 on the first plane X is located outside the orthographic projection Z of the device body 110 on the first plane X, the first mounting wall 1211 is provided with a first assembly hole 1211a for fixing the device body 110 to the ground, and the first plane X is perpendicular to the direction of gravity G of the device body 110 (as shown in FIG. 1, the included angle between the first plane X and the direction of gravity G is 90°).

It should be noted that the orthographic projection Y of the first mounting wall 1211 on the first plane X refers to the projection of the first mounting wall 1211 on the first plane X along the direction of gravity G; the orthographic projection of the device body 110 on the first plane X refers to the projection of the device body 110 on the first plane X along the direction of gravity G, where the first plane X and the direction of gravity G are perpendicular to each other.

In this embodiment, in one aspect, the orthographic projection Y of the first mounting wall 1211 of the support structure 120 that is provided with the first assembly hole 1211a on the first plane X is located outside the orthographic projection Z of the device body 110 on the first plane X, such that the first assembly hole 1211a is present in a staggered manner relative to the device body 110 in the horizontal direction H and thereby an operable space can be provided for the hole drilling apparatus in the horizontal direction H, and this solution enables more convenient hole drilling and mounting compared with the solution where the orthographic projection Y of the first mounting wall 1211 on the first plane X is located inside the orthographic projection Z of the device body 110 on the first plane X; in another aspect, this arrangement also allows for hole drilling in the ground at a position corresponding to the first assembly hole 1211a after the energy storage device 100 is moved to the predetermined mounting area, such that the problem of misalignment between the assembly hole of the support structure 120 and the hole in the ground due to hole drilling in advance in the predetermined mounting area can be ameliorated or solved, thereby improving the assembly efficiency of the energy storage device 100.

Optionally, as shown in FIG. 1 and FIG. 2, the first support plate 121 further includes a second mounting wall 1212 connected to the first mounting wall 1211. The orthographic projection P of the second mounting wall 1212 on the first plane X is located inside the orthographic projection Z of the device body 110 on the first plane X, and the second mounting wall 1212 is provided with a second assembly hole 1212a for fixing the device body 110 to the ground.

Similarly, the orthographic projection P of the second mounting wall 1212 on the first plane X refers to the projection of the second mounting wall 1212 on the first plane X along the direction of gravity G, where the first plane X and the direction of gravity G are perpendicular to each other.

In this embodiment, in addition to the first mounting wall 1211 with the orthographic projection Y on the first plane X located outside the orthographic projection Z of the device body 110 on the first plane X, the first support plate 121 further includes the second mounting wall 1212 with the orthographic projection P on the first plane X located inside the orthographic projection Z of the device body 110 on the first plane X, and the second mounting wall 1212 is provided with the second assembly hole 1212a. In one aspect, when the mounting space in the horizontal direction H is insufficient, this enables the operator to fix the energy storage device 100 to the ground by using the second assembly hole 1212a; for example, if the requirement on the integration level between the energy storage devices 100 is high, the energy storage device 100 may be fixed to the ground by drilling in the predetermined mounting area in advance, moving the energy storage device 100 to the predetermined mounting area to align the second assembly hole 1212a with the hole drilled in the ground in advance, and finally inserting a bolt into the second assembly hole 1212a and the hole drilled in the ground in advance. In another aspect, when the mounting space in the horizontal direction H is sufficient, this facilitates the mounting of the energy storage device 100 through both the first assembly hole 1211a and the second assembly hole 1212a, which not only can save the mounting space, but also can improve the stability of the energy storage device 100.

Optionally, in an embodiment, the first support plate 121 is a flat plate.

In this embodiment, allowing the first support plate 121 to be provided as a flat plate can save the space occupied by the first support plate 121 and facilitate the processing of the first support plate 121 as well. Meanwhile, the flat plate structure of the first support plate 121 allows the first mounting wall 1211 and the second mounting wall 1212 to be two parts of the first support plate 121 on the same plane, which can facilitate the formation of the assembly hole, save the cost, and ensure the processing and assembly efficiency.

In some embodiments, the first support plate 121 may also not be a flat plate. For example, the first mounting wall 1211 and the second mounting wall 1212 of the first support plate 121 may be two mounting walls with different thicknesses, that is, the connection part between the first mounting wall 1211 and the second mounting wall 1212 is of a step structure.

Optionally, in another embodiment, the first mounting wall 1211 and the second mounting wall 1212 are integrally formed.

In this embodiment, allowing the first mounting wall 1211 and the second mounting wall 1212 to be integrally formed can enhance the connection strength between the first mounting wall 1211 and the second mounting wall 1212, thereby improving the stability and reliability of the energy storage device 100.

Optionally, in some other embodiments, the first mounting wall 1211 and the second mounting wall 1212 may also be separate components, and the two components are connected together by welding or the like. This is not limited in the embodiments of the present application.

Optionally, as shown in FIG. 1, the support structure 120 further includes a fixing member 122. The fixing member 122 protrudes relative to the first support plate 121 in a direction away from the first support plate 121, and the fixing member 122 is connected between the device body 110 and the first support plate 121.

Optionally, one end of the fixing member 122 along the direction of gravity G of the device body 110 is connected to the first support plate 121, and thereby the first support plate 121 may be divided into the first mounting wall 1211 and the second mounting wall 1212. The other end of the fixing member 122 along the direction of gravity G of the device body 110 is connected to the device body 110, such that the orthographic projection Y of the first mounting wall 1211 on the first plane X perpendicular to the direction of gravity G is located outside the orthographic projection Z of the device body 110 on the first plane X, and the orthographic projection P of the second mounting wall 1212 on the first plane X is located inside the orthographic projection Z of the device body 110 on the first plane X.

In this embodiment, in one aspect, the fixing member 122 can connect the device body 110 to the first support plate 121, such that the support structure 120 can support the device body 110; in another aspect, the height of the device body 110 may be raised by the fixing member 122 to reserve more mounting space for the first support plate 121, thereby ensuring the reliable, stable and convenient mounting of the energy storage device 100.

Optionally, with further reference to FIG. 1, the orthographic projection Y of the first mounting wall 1211 on the first plane X perpendicular to the direction of gravity G and the orthographic projection P of the second mounting wall 1212 on the first plane X perpendicular to the direction of gravity G are located on two sides, respectively, of the orthographic projection R of the fixing member 122 on the first plane X.

Similarly, the orthographic projection R of the fixing member 122 on the first plane X refers to the projection of the fixing member 122 on the first plane X along the direction of gravity, where the first plane X and the direction of gravity G are perpendicular to each other.

In this embodiment, allowing the orthographic projection Y of the first mounting wall 1211 and the orthographic projection P of the second mounting wall 1212 on the first plane X to be provided on two sides, respectively, of the orthographic projection R of the fixing member 122 on the first plane X is beneficial for reducing the material consumption of the support structure 120, thereby lowering the cost of the energy storage device 100.

Optionally, in the embodiments of the present application, the fixing member 122 is perpendicular to the first support plate 121.

Optionally, in other embodiments, the first support plate 121 may include only the first mounting wall 1211, without the second mounting wall 1212. For example, the first support plate 121 and the fixing member 122 may form an "L" shape.

Optionally, as shown in FIG. 1, the dimension of the first mounting wall 1211 is smaller than the dimension of the second mounting wall 1212 in the horizontal direction H.

In this embodiment, allowing the dimension of the first mounting wall 1211 to be smaller than the dimension of the second mounting wall 1212 in the horizontal direction H can minimize the gap between energy storage devices 100, thereby enhancing the integration level of a plurality of energy storage devices 100.

Optionally, in the embodiments of the present application, the first mounting wall 1211 may be provided with one first assembly hole 1211a, or may be provided with a plurality of first assembly holes 1211a. For example, the first mounting wall 1211 may be provided with two first assembly holes 1211a. Optionally, for ease of mounting, the first assembly hole 1211a may be provided in a "U" shape. However, those skilled in the art will appreciate that the embodiments of the present application are not limited thereto; for example, the first assembly hole 1211a may also be provided as a circular hole, an elliptical hole, or a profiled hole.

Similarly, in the embodiments of the present application, the second mounting wall 1212 may be provided with one second assembly hole 1212a, or may be provided with a plurality of second assembly holes 1212a. For example, the second mounting wall 1212 may be provided with two second assembly holes 1212a. Optionally, for ease of mounting, the second assembly hole 1212a may be provided in a "U" shape. However, those skilled in the art will appreciate that the embodiments of the present application are not limited thereto; for example, the second assembly hole 1212a may also be provided as a circular hole, an elliptical hole, or a profiled hole.

As shown in FIG. 3, a gasket 124 is provided on the bottom surface of the first support plate 121. Optionally, the material of the gasket 124 may be stainless steel.

In this embodiment, adding the gasket 124 to the bottom surface of the first support plate 121 is beneficial for reducing the probability of wearing and/or corrosion of the coating on the bottom of the support structure 120.

With further reference to FIG. 3, the gasket 124 may be fixedly connected to the first support plate 121 through rivet nuts 125.

Specifically, the rivet nut 125 is threaded into a mounting hole 126 where the first support plate 121 is aligned with the gasket 124, then the rivet nut 125 is inserted into the mounting hole 126, and the rivet pulling apparatus is pressed tightly against the end surface of the rivet nut 125 to perform the rivet pulling operation until the reverse side of the rivet nut 125 expands and fractures.

In this embodiment, the use of the rivet nuts 125 to fix the first support plate 121 and the gasket 124 together can provide a reliable connection at low cost and the rivet nuts are easy to use; meanwhile, since a small space is occupied for the rivet pulling process, connecting the gasket 124 and the first support plate 121 in a rivet pulling mode can simplify the mounting and operation processes and thereby improve the operation efficiency.

Optionally, as shown in FIG. 1 and FIG. 2, the support structure 120 further includes a second support plate 123. The orthographic projection Q of the second support plate 123 on the first plane X perpendicular to the direction of gravity G is located inside the orthographic projection Z of the device body 110 on the first plane X, and the second support plate 123 is provided with a third assembly hole 123a for fixing the device body 110 to the ground.

In this embodiment, in addition to the first assembly hole 1211a with the orthographic projection Y on the first plane X perpendicular to the direction of gravity G located outside the orthographic projection Z of the device body 110 on the first plane X, the support structure 120 further includes the third assembly hole 123a with the orthographic projection Q on the first plane X located inside the orthographic projection Z of the device body 110 on the first plane X, such that the hole drilling apparatus can perform on-site drilling outside the device body 110, which improves the assembly efficiency and strengthens the fixation between the device body 110 and the ground as well.

Optionally, as shown in FIG. 2, the support structure 120 includes at least one pair of first support plates 121. Each pair of first support plates 121 includes two first support plates 121, and at least one second support plate 123 is correspondingly provided for each pair of first support plates 121. The two first support plates 121 of each pair of first support plates 121 are spaced apart from each other at the bottom of the device body 110, and the second support plate 123 is provided between the two first support plates 121.

In this embodiment, allowing the two first support plates 121 of each pair of first support plates 121 to be spaced apart from each other at the bottom of the device body 110 and providing the second support plate 123 between the two first support plates 121 is beneficial for making the support structure 120 uniformly provide a support force for the device body 110, thereby improving the stability of the energy storage device 100.

For example, as shown in FIG. 2, the support structure 120 includes two pairs of first support plates 121, that is, four first support plates 121. The four first support plates 121 are provided near short sides of the bottom surface of the device body 110, and each pair of first support plates 121 is symmetrically provided with respect to the central axis of the bottom surface parallel to the short sides. One second support plate 123 is provided between each pair of first support plates 121, that is, the support structure 120 further includes two second support plates 123.

It should be noted that reference may be made to the first support plate 121 for the connection between the second support plate 123 and the device body 110. For example, as shown in FIG. 1, the first support plate 121 and the device body 110 are connected through the fixing member 122, and the second support plate 123 and the device body 110 are also connected through the fixing member 122. The second support plate 123 and the fixing member 122 are perpendicular to each other, and the second support plate 123 and the fixing member 122 may be provided in an "L" shape.

Optionally, as shown in FIG. 2, a protection plate 130 is provided at the bottom of the device body 110.

In this embodiment, adding the protection plate 130 to the bottom of the device body 110 can avoid the damage, caused by forklift arms, to the coating of the contact surface at the bottom of the device body 110 when the energy storage device 100 is transported by a forklift.

In some embodiments, the protection plate 130 is provided in an edge region at the bottom of the device body 110.

In this embodiment, the protection plate 130 is provided in the edge region at the bottom of the device body 110, and the protection plate 130 does not need to completely cover the bottom of the device body 110, that is, the protection plate 130 only needs to cover the part of the bottom of the device body 110 that may be in contact with the forklift, such that the material consumption of the protection plate 130 can be reduced while reducing the damage, caused by the forklift arms, to the coating of the contact surface at the bottom of the device body 110, thereby lowering the cost.

Optionally, in some other embodiments, the material of the protection plate 130 may be foam.

Referring to FIG. 1 to FIG. 3 again, the energy storage device 100 includes: the device body 110 and the support structure 120, where the support structure 120 includes two pairs of first support plates 121 and two second support plates 123; each pair of first support plates 121 includes two first support plates 121, the four first support plates 121 are provided near the short sides of the bottom surface of the device body 110, each pair of two first support plates 121 is symmetrically provided with respect to the central axis of the bottom surface parallel to the short sides, and one second support plate 123 is provided between each pair of two first support plates 121, where each first support plate 121 includes the first mounting wall 1211 and the second mounting wall 1212, the first mounting wall 1211 is provided with the first assembly hole 1211a for fixing the device body 110 to the ground, the second mounting wall 1212 is provided with the second assembly hole 1212a for fixing the device body 110 to the ground, and the second support plate 123 is provided with the third assembly hole 123a for fixing the device body 110 to the ground; the orthographic projection Y of the first mounting wall 1211 on the first plane X is located outside the orthographic projection Z of the device body 110 on the first plane X, the orthographic projection P of the second mounting wall 1212 on the first plane X is located inside the orthographic projection Z of the device body 110 on the first plane X, and the orthographic projection Q of the second support plate 123 on the first plane X is located inside the orthographic projection Z of the device body 110 on the first plane X; the first support plate 121 is connected to the device body 110 through the fixing member 122, the second support plate 123 is also connected to the device body through the fixing member 122, the first support plate 121 is perpendicular to the fixing member 122, and the second support plate 123 is also perpendicular to the fixing member 122; the orthographic projection Y of the first mounting wall 1211 on the first plane X and the orthographic projection P of the second mounting wall 1212 on the first plane X are located on two sides, respectively, of the orthographic projection R of the fixing member 122 on the first plane X, and the dimension of the first mounting wall 1211 is smaller than the dimension of the second mounting wall in the horizontal direction H. The gasket 124 is provided on the bottom surfaces of the first support plate 121 and the second support plate 123, and the protection plate 130 is provided at the bottom of the device body 110.

In this embodiment, the orthographic projection Y of the first mounting wall 1211 of the support structure 120 that is provided with the first assembly hole 1211a on the first plane X is located outside the orthographic projection Z of the device body 110 on the first plane X, such that the first assembly hole 1211a is present in a staggered manner relative to the device body 110 in the horizontal direction H and thereby an operable space can be provided for the hole drilling apparatus in the horizontal direction H. This can ameliorate or solve the problem of misalignment between the assembly hole of the support structure 120 and the hole in the ground due to hole drilling in advance in the predetermined mounting area, thereby improving the assembly efficiency of the energy storage device 100. Furthermore, in addition to the first mounting wall 1211 with the orthographic projection Y on the first plane X located outside the orthographic projection Z of the device body 110 on the first plane X, further included are the second mounting wall 1212 with the orthographic projection P on the first plane X located inside the orthographic projection Z of the device body 110 on the first plane and the second support plate 123 with the orthographic projection Q on the first plane X located inside the orthographic projection Z of the device body 110 on the first plane X, the second mounting wall 1212 is provided with the second assembly hole 1212a, and the second support plate 123 is provided with the third assembly hole 123a. In one aspect, when the mounting space in the horizontal direction H is insufficient, this enables the operator to fix the energy storage device 100 to the ground by using the second assembly hole 1212a and the third assembly hole 123a; in another aspect, when the mounting space in the horizontal direction H is sufficient, this facilitates the mounting of the energy storage device 100 through the first assembly hole 1211a, the second assembly hole 1212a, and the third assembly hole 123a, which not only can save the mounting space, but also can improve the stability of the energy storage device 100. Finally, adding the gasket 124 to the bottom surfaces of the first support plate 121 and the second support plate 123 is beneficial for reducing the probability of wearing and/or corrosion of the coating on the bottom of the support structure 120. Besides, adding the protection plate 130 to the bottom of the device body 110 can avoid the damage, caused by forklift arms, to the coating of the contact surface at the bottom of the device body 110 when the energy storage device 100 is transported by a forklift.

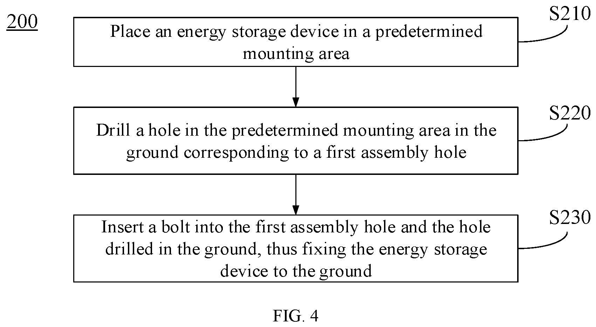

FIG. 4 shows a schematic block diagram of a mounting method 200 of an energy storage device according to an embodiment of the present application. The energy storage device is the energy storage device 100 described in the above various embodiments. As shown in FIG. 4, the mounting method 200 may include some or all of the following steps.

S210, the energy storage device 100 is placed in a predetermined mounting area.

S220, a hole is drilled in the predetermined mounting area in the ground corresponding to a first assembly hole 1211a.

S230, a bolt is inserted into the first assembly hole 1211a and the hole drilled in the ground, thus fixing the energy storage device 100 to the ground.

In this embodiment, since the first assembly hole 1211a is present in a staggered manner relative to the device body 110 in the horizontal direction H, the energy storage device 100 can be fixed to the ground by first placing the energy storage device 100 in the predetermined mounting area, then drilling a hole in the ground corresponding to the first assembly hole 1211a, and finally inserting a bolt into the first assembly hole 1211a and the hole drilled in the ground. This can ameliorate or solve the problem of misalignment between the assembly hole of the support structure 120 and the hole in the ground due to hole drilling in advance in the predetermined mounting area, thereby improving the assembly efficiency of the energy storage device 100.

Although the present application has been described with reference to preferred embodiments, various modifications can be made and components can be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. An energy storage device, comprising:
a device body (110); and
a support structure (120) provided at a bottom of the device body (110) for supporting the device body (110);
wherein the support structure (120) comprises a first support plate (121), the first support plate (121) comprises a first mounting wall (1211), an orthographic projection (Y) of the first mounting wall (1211) on a first plane (X) is located outside an orthographic projection (Z) of the device body (110) on the first plane (X), the first mounting wall (1211) is provided with a first assembly hole (1211a) for fixing the device body (110) to the ground, and the first plane (X) is perpendicular to a direction of gravity (G) of the device body (110).

2. The energy storage device according to claim 1, wherein the first support plate (121) further comprises a second mounting wall (1212) connected to the first mounting wall (1211), an orthographic projection (P) of the second mounting wall (1212) on the first plane (X) is located inside the orthographic projection (Z) of the device body (110) on the first plane (X), and the second mounting wall (1212) is provided with a second assembly hole (1212a) for fixing the device body (110) to the ground.

3. The energy storage device according to claim 2, wherein the first support plate (121) is a flat plate.

4. The energy storage device according to claim 2 or 3, wherein the first mounting wall (1211) and the second mounting wall (1212) are integrally formed.

5. The energy storage device according to any one of claims 2 to 4, wherein the support structure (120) further comprises a fixing member (122), the fixing member (122) protrudes relative to the first support plate (121) in a direction away from the first support plate (121), and the fixing member (122) is connected between the device body (110) and the first support plate (121).

6. The energy storage device according to claim 5, wherein the orthographic projection (Y) of the first mounting wall (1211) on the first plane (X) and the orthographic projection (P) of the second mounting wall (1212) on the first plane (X) are located on two sides, respectively, of an orthographic projection (R) of the fixing member (122) on the first plane (X).

7. The energy storage device according to claim 6, wherein a dimension of the first mounting wall (1211) is smaller than a dimension of the second mounting wall (1212) in a horizontal direction (H).

8. The energy storage device according to any one of claims 1 to 7, wherein a gasket (124) is provided on a bottom surface of the first support plate (121).

9. The energy storage device according to claim 8, wherein the gasket (124) is fixedly connected to the first support plate (121) through rivet nuts (125).

10. The energy storage device according to any one of claims 1 to 9, wherein a protection plate (130) is provided at the bottom of the device body (110).

11. The energy storage device according to claim 10, wherein the protection plate (130) is provided in an edge region at the bottom of the device body (110).

12. The energy storage device according to any one of claims 1 to 11, wherein the support structure (120) further comprises a second support plate (123), an orthographic projection Q of the second support plate (123) on the first plane (X) is located inside the orthographic projection (Z) of the device body (110) on the first plane (X), and the second support plate (123) is provided with a third assembly hole (123a) for fixing the device body (110) to the ground.

13. The energy storage device according to claim 12, wherein the support structure (120) comprises at least one pair of first support plates (121), each pair of first support plates (121) comprises two first support plates (121), at least one second support plate (123) is correspondingly provided for each pair of first support plates (121), the two first support plates (121) of each pair of first support plates (121) are spaced apart from each other at the bottom of the device body (110), and the at least one second support plate (123) is provided between the two first support plates (121).
